# EUROPÄISCHE PATENTSCHRIFT

(11) **EP 0 432 651 B1**
(45) Veröffentlichungstag und Bekanntmachung des Hinweises auf die Patenterteilung: **13.09.1995**
(21) Anmeldenummer: 90123491.4
(22) Anmeldetag: 07.12.1990
(51) Int. Cl.: C02F 1/26, C02F 3/12, B09B 5/00

(54) **Verfahren zur Reinigung von mit biologisch abbaubaren Schadstoffen kontaminierten Böden**
Process for the purification of contaminated soils from biodegradable harmful substances
Procédé de purification de sols contaminés de matières nocives biodégradables

(30) Priorität: 15.12.1989 DE 3941510
(43) Veröffentlichungstag der Anmeldung: 19.06.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: Chmiel, Horst, Prof. Dr., W-7250 Leonberg (DE); Bryniok, Dieter, Dr., W-7409 Dusslingen (DE); Clemens, Wulf-Christian, Dipl.-Ing., W-7000 Stuttgart 1 (DE); Knackmuss, Hans-Joachim, Prof. Dr., W-7250 Leonberg 5 (DE)

(56) Entgegenhaltungen:
- WO-A-88/09199
- WO-A-89/04356
- DE-A- 3 711 161
- DE-A- 3 803 634

## Beschreibung

Die Erfindung betrifft ein Verfahren zur Entfernung und Vernichtung von biologisch abbaubaren Schadstoffen aus Abwässern, z.B. aus Prozeßwässern von Bodenwaschverfahren zur Sanierung kontaminierter Böden. Die Erfindung betrifft somit auch ein Verfahren zur Reinigung von mit Schadstoffen kontaminierten Böden, bei dem biologisch abbaubaren Schadstoffe vernichtet werden.

In der Bundesrepublik Deutschland existieren ca. 50 000 bis 60 000 Verdachtsflächen, von denen nach Schätzungen einige tausend sanierungsbedürftig sind. Die Sanierung kontaminierter Böden erfolgt auch heute noch vielfach durch Auskofferung des Bodens und Ablagerung auf einer Sondermülldeponie. Dies stellt keine Lösung dieses Problems dar, sondern lediglich dessen zeiltliche und räumliche Verlagerung und unter Umständen sogar dessen Verschärfung, wenn die kontaminierten Böden mit andersartigen Schadstoffen vermischt werden. Man war deshalb bestrebt, Technologien zu entwickeln, durch die die Böden gereinigt und wiederverwendet werden können. Dazu werden zur Zeit im wesentlichen thermische, mikrobiologische oder chemisch-physikalische Verfahren angewendet.

Die thermische Behandlung kontaminierter Böden erfolgt in einem direkt oder indirekt beheizten Drehrohr oder in einem Wirbelschichtreaktor bei Temperaturen zwischen 450 °C und 1200 °C. Die Schadstoffe werden in der Hitze desorbiert und in einer Hochtemperatur-Nachverbrennung zerstört.

Die thermischen Verfahren sind wegen der erforderlichen hohen Temperaturen sehr energieaufwendig und teuer. Ein weiterer Nachteil ist das notwendigerweise sehr aufwendige Abluftreinigungssystem, das sich wenigstens an den Anforderungen der diesbezüglich jeweils gültigen gesetzlichen Vorschriften, wie z.B. der TA-Luft, zu orientieren hat. So muß z.B. bei der Behandlung von mit chlorierten Kohlenwasserstoffen kontaminierten Böden, analog der Müll- oder Klärschlammverbrennung, prinzipiell mit einer Belastung der Abluft durch polychlorierte Dibenzofurane (PCDF) bzw. polychlorierte Dibenzodioxine (PCDD) gerechnet werden. Diese Probleme sind die Ursachen langwieriger Genehmigungsverfahren für derartige Anlagen und für die zunehmenden Akzeptanzprobleme in der Bevölkerung.

Die biologischen Verfahren werden unterteilt in in-situ-Verfahren, mit denen der Boden ohne Auskofferung an Ort und Stelle saniert wird, und in Verfahren, bei denen der Boden ausgekoffert und vor Ort (on site) oder in Bodensanierungszentren (off site) biologisch behandelt wird. Die biologischen Verfahren sind anwendbar für viele organische Verbindungen, wie z.B. für Mineralöl-Kohlenwasserstoffe, aromatische Kohlenwasserstoffe oder kurzkettige n-Alkane, wesentlich schlechter jedoch für polycyclische oder stark halogenierte oder nitrierte Aromaten.

Das den biologischen in-situ-Verfahren gemeinsame Prinzip ist die Zirkulation von Wasser durch den kontaminierten Boden. Diese Zirkulatuion wird durch Brunnen erreicht, durch die Grundwasser gefördert und an anderer Stelle wieder in den Boden gepumpt wird. In verschiedenen Varianten wird das Gelände großflächig berieselt, werden Nährstoffe, Nitrate, Sauerstoff oder H₂O zugesetzt, oder es wird über einen zwischengeschalteten Bioreaktor mit geeigneten Mikroorganismen angereichert.

Die on-site-Behandlung wird in der Regel in Abbaubeeten oder -mieten durchgeführt. In den verschiedenen Varianten wird der Boden zuvor homogenisiert, mit Borke, Stroh oder Holzspänen versetzt, mit Mikroorganismen beimpft, temperiert, belüftet, gedüngt, gewässert oder mehrfach umgeschichtet. Weitere Variationsmöglichkeiten liegen in den Dimensionen der Beete, der Art der Belüftung und der Drainageschichten. Seltener wird die Behandlung in Bioreaktoren durchgeführt. Dabei kommen ausschließlich Trommelreaktoren zum Einsatz, wie sie als Rottetrommeln von der Müllverbrennung her bekannt sind.

Biologische in-situ-Verfahren zur Bodensanierung beinhalten verschiedene Probleme. In Böden mit hohem Schluff-Anteil, also geringen Wassertransportraten, sind sie nicht anwendbar, ebenso bei extrem schwerlöslichen Kontaminationen. Eine zuverlässige Erfolgskontrolle ist nicht durchführbar und eine Gefährdung des Grundwassers kann nicht ausgeschlossen werden. Bei Einsatz von Tensiden oder Lösungsmitteln besteht außerdem die Gefahr einer zusätzlichen Kontamination, bei Nährstoffzufuhr die der Überdüngung des Bodens. Auch on-site-Verfahren in Mieten sind bei Böden mit hohem Schluff-Anteil nicht anwendbar. Bei Kontaminationen mit schwer abbaubaren Stoffen werden ferner sehr lange Inkubationszeiten und große Flächen benötigt, die Sanierung großer Gelände ist also auf diese Weise nicht möglich. Die verfügbaren Bioreaktoren, in denen der Boden biologisch behandelt werden kann, lassen nur die Behandlung relativ kleiner Bodenmengen zu.

Waschverfahren finden ihre Anwendung bei Schwermetallen, Cyaniden, Kohlenwasserstoffen und halogenierten Kohlenwasserstoffen. Der Boden wird hier in Waschtrommeln, Waschbädern, in Hochdruckstrahlrohren oder in Zentrifugalbeschleunigern von den Schadstoffen befreit. Insbesondere bei Kontaminationen mit Kohlenwasserstoffen, aromatischen und polycyclischen, aromatischen Kohlenwasserstoffen kommen dabei auch Lösungsmittel oder Tenside zum Einsatz. Verschiedentlich wird das Prozeßwasser aus Bodenwaschverfahren in einer biologischen Stufe nachbehandelt, mit dem Ziel, die gelösten Schadstoffe mikrobiell abzubauen.

In der DE 3738264 C1 wird ein Bodenwaschverfahren beschrieben, wobei dem Waschwasser Natriumpyrophosphat oder Natriumoxalat zugesetzt ist. In FEMS Microbiol.Rev.63 (1989), Seite 289 wird ein Verfahren beschrieben, bei welchem aus kontaminierten Böden Grundwasser, welches die Kontaminationen enthält, entzogen und mit Nährstoffen versehen in einen Bioreaktor geleitet wird, wo dann die Kontaminationen biologisch abgebaut werden. In Chem. Eng. (N.Y.) 96 (8) (1989), Seite 94 bis 110, wird auf den Seiten 101 und 102 ein Bodenwaschverfahren beschrieben, bei welchem ausgehobenes Erdreich mit einem geeigneten Lösungsmittel in einem Reaktionsgefäß vermischt wird, wobei die Schadstoffe in das Lösungsmittel wandern. Anschließend wird das Lösungsmittel vom Erdreich getrennt und die Schadstoffe zur Weiterbehandlung oder zur Deponierung aus dem Lösungsmittel entfernt. Für alle diese Verfahren gelten sowohl die oben genannten, sowie die im folgenden genannten Nachteile.

Grundsätzlich haben Waschverfahren gegenüber thermischen und biologischen Verfahren den Nachteil, daß die Schadstoffe nicht vernichtet, sondern nur mit dem Prozeßwasser aus den kontaminierten Böden ausgewaschen werden. Diese Prozeßwässer sind Dispersionen aus Wasser, Schadstoffen, fein- bis feinstkörnigen Bodenfraktionen und eventuell zugesetzten Tensiden oder Lösungsmitteln. Die Behandlung der Prozeßwässer beschränkt sich bei herkömmlichen Bodenwaschverfahren auf sehr aufwendige, mechanische Techniken wie Abtrennung der Partikel durch Waschklassierer, Hydrozyklone oder Multizyklone, sowie den Einsatz von Flockungs- oder Fällungsmitteln zur Abtrennung der Feststoffe. Erfahrungsgemäß ist der größte Teil der lipophilen Schadstoffe gerade an den im Prozeßwasser suspendierten Bodenpartikeln gebunden, wobei die Schadstoffkonzentrationen, bezogen auf das Trockengewicht, bei den feinstkörnigen Bodenfraktionen am höchsten ist. Die aus den Prozeßwässern abgetrennten fein- und feinstkörnigen Bodenfraktionen müssen als Sondermüll weiterbehandelt werden. Deshalb entspricht der Preis dieser Technik in etwa dem einer thermischen Behandlung. Grundsätzlich ist ein solches Verfahren jedoch nur bei Sand- oder Kiesböden mit geringem Schluff-Anteil, bis maximal 20 %, durchführbar, bei höheren Schluff-Anteilen müßte ein zu großer Teil des Bodens aus dem Prozeßwasser abgetrennt und entsorgt werden.

Die biologische Nachbehandlung der Prozeßwässer ist auf kleine Bodenmengen und relativ leicht abbaubare Stoffe beschränkt, wie z.B. auf mit Benzin kontaminierte Tankstellengelände. Die hydraulischen Verweilzeiten betragen im allgemeinen maximal 6 Stunden. Für den biologischen Abbau schwer abbaubarer Stoffe und für die damit verbundenen notwendigerweise langen hydraulischen Verweilzeiten werden unrealisierbar große Reaktorvolumina benötigt. Insbesondere bei Altlasten an Industriestandorten sind im allgemeinen große Bodenvolumina kontaminiert, eine "biologische" Bodenwäsche ist in solchen Fällen nicht anwendbar.

Aufgabe dieser Erfindung ist es deshalb, ein kostengünstiges Verfahren zur Verfügung zu stellen, mit welchem Schadstoffe aus kontaminierten Böden entfernt und wirkungsvoll vernichtet werden können, ohne daß die oben genannten Nachteile auftreten. Das Verfahren soll unabhängig von der Größe der zu sanierenden Bodenvolumina und unabhängig von der Beschaffenheit der zu sanierenden Böden anwendbar sein, so daß dadurch ein universell einsetzbares und kostengünstiges Verfahren zur Sanierung von Böden zur Verfügung gestellt werden kann. Bei dem Verfahren sollen die Schadstoffe nicht nur aus dem Boden entfernt werden, sondern auch zu unbedenklichen Stoffen abgebaut werden können.

Gelöst wird diese Aufgabe dadurch, daß man den kontaminierten Boden einem Bodenwaschverfahren unterzieht, bei welchem die Schadstoffe in das Prozeßwasser des Bodenwaschverfahrens, also in das Waschwasser übergeführt werden, daß man aus dem Prozeßwasser des Bodenwaschverfahrens durch Extraktion mit einem geeigneten, in Wasser nur schwer löslichen Extraktionsmittel die biologisch abbaubaren Schadstoffe entfernt und in das Extraktionsmittel überführt, daß man das mit den biologisch abbaubaren Schadstoffen beladene Extraktionsmittel von dem Prozeßwasser abtrennt und in einen Bioreaktor leitet, und daß in dem Bioreaktor die biologisch abbaubaren Schadstoffe durch biologischen Abbau mittels geeigneter Mikroorganismen aus dem Extraktionsmittel entfernt und vernichtet werden.

Mit Hilfe des erfindungsgemäßen Verfahrens ist es also möglich geworden, aus den Prozeßwässern von Bodenwaschverfahren biologisch abbaubaren Schadstoffe zu entfernen und zu vernichten, indem man aus diesen Prozeßwässern durch Extraktion mit geeigeten, in Wasser nur schwer löslichen Extraktionsmitteln die biologisch abbaubaren Schadstoffe entfernt und in das Extraktionsmittel überführt, indem man die mit den Schadstoffen beladene Extraktionsmittel von den Prozeßwässern abtrennt und in einen Bioreaktor leitet, und indem man die Schadstoffe in diesem durch biologischen Abbau mittels geeigneter Mikroorganismen vernichtet. Dieses Verfahren ist nicht nur auf Prozeßwässer von Bodenwaschverfahren anwendbar, sondern auch auch auf Deponiesickerwässer und sogar auf Abwässer jeder Art, die biologisch abbaubare Schadstoffe enthalten.

Erfindungswesentlich und besonders vorteilhaft ist die Kombination einer Extraktion der biologisch abbaubaren Schadstoffe mittels eines geeigneten Extraktionsmittels aus dem zu reinigenden Prozeß- bzw. Abwasser mit einem biologischen Abbau der extrahierten Schadstoffe in einem Bioreaktor, bzw. die Kombination eines Bodenwaschverfahrens mit einer Extraktion der biologisch abbaubaren Schadstoffe aus dem Prozeß- bzw. Waschwasser mittels eines geeigneten Extraktionsmittels und einem biologischen Abbau der extrahierten Schadstoffe in einem Bioreaktor.

Um die Wirkung der Bodenwäsche nach dem erfindungsgemäßen Verfahren weiter zu erhöhen, können dem Waschwasser vor der Bodenwäsche Tenside zu gesetzt werden. Diese werden im Zuge der an die Bodenwäsche angeschlossenen Extraktion zusammen mit den Schadstoffen aus dem Waschwasser extrahiert und zusammen mit dem Extraktionsmittel in den Bioreaktor geleitet. Überraschenderweise wurde festgestellt, daß die Anwesenheit von Tensiden im Bioreaktor dazu führt, daß der mikrobielle Schadstoffabbau stark beschleunigt wird. Um den zu sanierenden Boden nicht weiter zu belasten ist es vorteilhaft, wenn biologisch leicht und voll abbaubare Tenside eingesetzt werden. Geeignete Tenside sind z.B. Biosoft HR 18 ^{R} und Biosoft HR 33 ^{R}. Diese haben die folgende Struktur:
H₃C-(CH₂)₅-CHOH-CH₂-CH=CH-(CH₂)₇-COO-(CH₂-CH₂-O)ₙ-H mit n = 18 für Biosoft HR 18 ^{R} und n = 33 für Biosoft HR 33 ^{R}. Ferner geeignet sind z.B. mikrobiell erzeugte Rhamnolipide, z.b. von P. aeruginosa.

Im Gegensatz zur Extraktion mit organischen Lösungsmitteln gemäß dem Stand der Technik (Chem. Eng. (N.Y.) 96 (8) (1989), Seite 94 bis 110) wird der Boden im erfindungsgemäßen Verfahren nicht durch organische Lösungsmittel kontaminiert. Diese werden im erfindungsgemäßen Verfahren erst zur Reinigung des Waschwassers eingesetzt. Nach dem erfindungsgemäßen Verfahren kommt der zu sanierende Boden lediglich mit den biologisch leicht und voll abbaubaren Tensiden in Berührung, die aus dem Waschwasser extrahiert werden und den Vorteil bieten, daß sie im Bioreaktor als Emulgatoren wirken und überraschenderweise zu einem schnelleren Abbau der Schadstoffe führen.

Mit dem erfindungsgemäßen Verfahren ist es möglich geworden, biologisch abbaubare Schadstoffe aus Prozeßwässern von Waschverfahren sogar solcher Böden zu entfernen, die sehr hohe Schluff-Anteile aufweisen und deshalb dazu führen, daß die entsprechenden Waschwässer einen sehr hohen Anteil an feinkörnigen und feinstkörnigen Bodenfraktionen enthalten. Mit dem erfindungsgemäßen Verfahren werden auch die Feinkorn-und Feinstkornfraktionen von Schadstoffen befreit. Dadurch wird die Ansammlung von Sondermüll vermieden und die Kosten des Bodenwaschverfahrens werden erheblich reduziert. Diese Fraktionen können gemeinsam mit den sandigen Fraktionen bzw. den Kiesfraktionen des Bodenwaschverfahrens wieder im Originalstandort verfüllt oder anderweitig, z.B. als Baumaterial, verwendet werden und müssen nicht mehr als Sondermüll entsorgt werden.

Durch das erfindungsgemäße Verfahren werden Bodenwäsche und mikrobielle Bodensanierung für Böden mit hohen Schluff-Anteilen, für Böden mit schwer abbaubaren Schadstoffen und für große Gelände erst einsetzbar, da das Extraktionsmittel die an den Feinkorn- bzw. Feinstkornpartikeln adsorbierten Schadstoffe löst, auch schwer abbaubare Schadstoffe, und die Schadstoffe anreichert. Mit dem erfindungsgemäßen Verfahren können somit biologisch abbaubare Schadstoffe aus allen Abwässern, die suspendierte Feststoffe oder Schwermetalle enthalten, an denen die Schadstoffe adsorbiert sind, entfernt und vernichtet werden.

Es gibt eine Vielzahl mikrobiell abbaubare Schadstoffe, auf die das erfindungsgemäße Verfahren angewendet werden kann: z.B. Kohlenwasserstoffe, chlorierte Kohlenwasserstoffe, aromatische Kohlenwasserstoffe, chlorierte und/oder polycyclische, aromatische Kohlenwasserstoffe, Styrole, Phenole etc..

Der Abbau der Schadstoffe kann durch bakterielle Mischkulturen oder durch Reinkulturen erfolgen. Die vielfältigsten Abbauaktivitäten zeigen Pseudomonaden. Der Schadstoffabbau kann aber auch durch Flavobakterien, Mikrococcen, Alkaligines, Actinomyceten oder durch andere Bakterien erfolgen, oder aber durch Weißfäulepilze.

Wie bei allen biologischen Boden- und Abwassersanierungen nach dem Stand der Technik, bei denen Schadstoffe durch Mikroorganismen abgebaut werden, können auch im erfindungsgemäßen Verfahren nicht nur Laborstämme oder gar rekombinierte Organismen eingesetzt werden. Es ist jedoch vorteilhafter, wenn aus der im Boden bzw. im Abwasser bereits vorhandenen Mikroflora geeignete Stämme isoliert und aktiviert werden, da diese in derart komplexen Umgebungen bessere Überlebensmöglichkeiten aufweisen.

Ein Verfahren nach dem Stand der Technik, um geeinete Mikroorganismen-Stämme zu erhalten, besteht z.B. darin, daß man aus Boden- bzw. aus Abwasserproben durch Screening-Methoden diejenigen Mikroorganismen isoliert, die in der Lage sind, die jeweiligen Schadstoffe abzubauen. Die Verfahrensparameter für den optimalen biologischen Abbau, wie z.B. Temperatur, Zuschlagstoffe, pH-Wert etc., werden dann auf die individuelle Mikroflora abgestimmt und sind in einem Bioreaktor leicht kontrollier- und regelbar. Dies sind aber Maßnahmen, die dem Fachmann geläufig sind. Der Fachmann ist in der Lage, aufgrund seines Fachwissens durch eine zumutbare Anzahl von Versuchen diejenigen Mikrorganismen und Verfahrensparameter zu ermitteln, die für die Sanierung des jeweiligen Schadensfalles geeignet sind.

In der Regel handelt es sich bei den Bakterien, die im kontaminierten Boden vorhanden sind, die Abbauaktivitäten gegenüber dem Schadstoff aufweisen und die für die Sanierung aktiviert werden sollen, um Organismen, die in der Lage sind, diesen Schadstoff als einzige Kohlenstoff- und Energiequelle nutzen zu können. Um diese Bakterien zu isolieren werden Bodenproben in Schüttelkolben inkubiert, die ein Mineralsalzmedium mit allen notwendigen Spurenelementen, aber keine Kohlenstoffquelle außer dem Schadstoff enthalten. Dadurch können nur die Organismen überleben, die den Schadstoff abbauen, oder von Stoffwechselprodukten der abbauenden Organismen leben. Aus diesen Anreicherungskulturen können die abbauenden Organismen durch Ausstreichen auf Agarplatten, die ebenfalls den Schadstoff als einzige Energiequelle beinhalten, isoliert werden. Nach Inkubation der Agarplatten im Brutschrank bilden sich Einzelkolonien von Bakterien, die durch Zellteilung aus einem einzelnen Keim hervorgegangen sind. Diese werden von der Agarplatte "gepickt" und in Reinkulturen weiter gezüchtet. Diese Techniken können in Abhängigkeit vom Schadstoff variiert werden. So kann es z.B. erforderlich sein, die Anreicherung nicht "batch"-weise in Schüttelkolben durchzuführen, sondern kontinuierlich in einem Chemostaten, wenn z.B. das Substrat für die Bakterien toxisch ist. Leicht flüchtige Schadstoffe können statt über das Medium auch über die Gasphase eingebracht werden. In den Fällen, in denen der Schadstoff nicht als Kohlenstoffquelle dienen kann, ist anders vorzugehen. Bei sticksoffhaltigen Verbindungen, z.B. bei Nitroaromaten in Rüstungsaltlasten, kann die Anreicherung unter Stickstofflimitierung mit dem Schadstoff als Stickstoffquelle erfolgen, bei anderen Verbindungen, z.B. bei CKWs, durch Anreicherung auf strukturanalogen Kohlenwasserstoffen. Die gewonnenen Reinkulturen werden näher untersucht, um die optimalen Bedingungen für den Abbau zu ermitteln. Diese Bedingungen werden dann im Bioreaktor ebenfalls eingestellt, um für den Abbauprozeß die autochthonen Bakterien optimal zu aktivieren.

Bei bevorzugten Ausführungsformen des erfindungsgemäßen Verfahrens erfolgt der Schadstoffabbau in einem Umlaufreaktor, in dem eine oder mehrere Phasen zirkulieren können. Geeignete Reaktortypen sind z.B. Air-Lift-, Strahlschlaufen-, Wirbelschicht- oder Propellerschlaufen-Reaktoren.

Werden im Bodenwaschverfahren biologisch abbaubare Tenside oder Lösungsmittel eingesetzt, so werden diese ebenso wie die Schadstoffe aus dem Boden und aus dem Waschwasser extrahiert und im Bioreaktor abgebaut, und sie belasten weder Boden noch Abwasser.

Ohne Einschränkung der Allgemeinheit werden zur Durchführung des erfindungsgemäßen Verfahrens flüssige Extraktionsmittel, die eine möglichst große Mischungslücke mit Wasser und eine möglichst große Löslichkeit für die Schadstoffe besitzen, bevorzugt. Besonders gute Ergebnisse erhält man bei lipophilen Schadstoffen, da hierfür eine Reihe von geeigneten lipophilen Extraktionsmitteln zur Verfügung stehen. Ohne Einschränkung der Allgemeinheit werden zur Durchführung des erfindungsgemäßen Verfahrens flüssige Extraktionsmittel bevorzugt, die eine geringere Dichte als das Prozeßwasser aufweisen, aus dem die Schadstoffe entfernt werden sollen.

Die im Wasser gelösten oder dispergierten Schadstoffe difundieren z.B. in das lipophile Extraktionsmittel, ebenso wie eventuell zur Bodenwäsche eingesetzte Tenside oder Lösungsmittel, und das Prozeß- bzw. Abwasser wird gereinigt. In dem Extraktionsmittel werden die Schadstoffe konzentriert und können so in einem Bioreaktor technisch realisierbarer Größe biologisch abgebaut werden. Die Abtrennung des mit den Schadstoffen beladenen Extraktionsmittels von den Prozeßwässern erfolgt nach üblichen Verfahren.

Wurden z.B. zur Bodenwäsche biologisch abbaubare Tenside eingesetzt, so wirken diese bei der Extraktion des Waschwassers und im Bioreaktor als Emulgatoren, die die Diffusionsoberfläche vergrößern, dadurch den Stoffübergang erleichtern und den biologischen Abbau der Schadstoffe beschleunigen.

Ohne Einschränkung der Allgemeinheit ist es besonders vorteilhaft, wenn der Schadstoffaustausch zwischen dem Prozeß- bzw. dem Abwasser, oder zwischen den festen Partikeln und dem Extraktionsmittel unter hochturbulenten Bedingungen in einem Extraktor erfolgt. Unter diesen Bedingungen werden suspendierte Partikel, die an der Oberfläche adsorbierte Schadstoffe enthalten, besonders effektiv gereinigt. Werden z.B. lipophile Schadstoffe, die an der Oberfläche von suspendierten Partikeln adsorbiert sind, mit Extraktionsmitteln, welche eine geringere Dichte aufweisen, als das zu reinigende Abwasser, extrahiert, so werden diese Partikel erst mit Wasser benetzt, wenn sie nicht mehr lipophil, also wenn sie sauber sind. Diese Partikel sedimentieren und können mit der schweren, d.h. der wässrigen Phase, ausgewaschen werden. Die Abtrennung der festen Partikel aus dem Abwasser kann durch mechanische Verfahren erfolgen. Ohne Einschränkung der Allgemeinheit kann die Sedimentation der suspendierten, festen Partikel in einem Settler bzw. einem Dekanter erfolgen.

Soll das mit den Schadstoffen beladene Extraktionsmittel regeneriert werden, weil es z.B. erneut der Extraktion zugeführt werden soll, so gibt es hierfür zwei Verfahrensvarianten:
1. Werden hochsiedende lipophile Flüssigkeiten, wie z.B. stark verzweigte, langkettige Kohlenwasserstoffe, wie z.B. 2,2',4,4',6,8,8'-Heptamethylnonan (HMN), oder Pflanzenöle, wie z.b. Sonnenblumenöl, als Extraktionsmittel eingesetzt, so werden diese nach der Extraktion des Prozeß- bzw. Abwassers zusammen mit den Schadstoffen in den Bioreaktor geleitet und können durch den biologischen Abbau der Schadstoffe regeniert werden. Das regenierte Extraktionsmittel wird mit einem mechanischen Verfahren abgetrennt und kann erneut der Extraktion zugeführt werden, und ein kontinuierliches Verfahren zur Entfernung und Vernichtung von biologisch abbaubaren Schadstoffen aus Prozeßwässern wird ermöglicht. Ohne Einschränkung der Allgemeinheit ist es vorteilhaft, wenn hierfür der Bioreaktor zur guten Durchmischung nach dem Umwurfprinzip arbeitet, z.B. als Air-Lift- oder als Schlaufenreaktor. Die Abtrennung der Extraktionsmittel kann in Dekantern, in Settlern oder in Zentrifugen erfolgen.
2. Werden leichtflüchtige Lösungsmittel als Extraktionsmittel eingesetzt und bilden die Schadstoffe mit dem Extraktionsmittel kein azeotropes Gemisch und können die Schadstoffe im Bioreaktor in Lösung gebracht werden, so können die Extraktionsmittel nach der Extraktion und vor der Einleitung der Schadstoffe in den Bioreaktor durch Destillation von den Schadstoffen abgetrennt und erneut der Extraktion zugeführt werden und ein kontinuierliches Verfahren zur Entfernung und Vernichtung von biologisch abbaubaren Schadstoffen aus Prozeßwässern wird ermöglicht. Bei dieser Verfahrensvariante wird nur noch der Rückstand der Destillation, der die Schadstoffe enthält, in den Bioreaktor zum biologischen Abbau geleitet. Geeignete Lösungsmittel hierfür sind z.B. Pentan, Hexan, Cyclohexan oder Toluol.

Mit dem erfindungsgemäßen Verfahren können Prozeßwässer aus Bodenwaschverfahren von lipophilen Schadstoffen bis zu solchen Konzentrationen gereinigt werden, die eine Rückführung der Wässer in die Bodenwäsche gestatten, bzw. die Einleitbedingungen in kommunale Kläranlagen erfüllen. Nach verschiedenen Waschstufen, in denen die Schadstoffe mechanisch durch hohe Scherkräfte von den Sand- und Kiesfraktionen des Bodens getrennt oder gelöst werden, kann eine Klassierung des behandelten Erdreiches erfolgen. Die nur schwierig zu behandelnden Fein- und Feinstkornfraktionen (< ca. 100 µm) werden zusammen mit dem Prozeßwasser einer Flüssig-Flüssig-Extraktion in einem hochturbulenten Extraktor zugeführt. Als Extraktionsmittel werden lipophile, nicht mit Wasser mischbare Flüssigkeiten bevorzugt, die vorteilhafterweise eine geringere Dichte aufweisen, als das zu behandelnde Waschwasser, wobei für das System Wasser/zu extrahierender Stoff/Extraktionsmittel eine möglichst große Mischungslücke existieren sollte, d.h. der Verteilungskoeffizient sollte möglichst groß sein. Die im Wasser gelösten, oder dispergierten, oder an suspendierten Partikeln adsorbierten Schadstoffe diffundieren in die lipophile Phase, ebenso wie die zur Bodenwäsche eingesetzten Tenside oder Lösungsmittel; das Waschwasser wird gereinigt. Durch den Einsatz geeigneter Extraktoren können sehr hohe Turbulenzen und mechanische Kräfte entwickelt werden, durch die auch die Oberfläche von fein- und feinstkörnigen Bodenfraktionen gereinigt wird. Erst wenn die Oberfläche dieser Bodenpartikel nicht mehr lipophil, sondern "sauber" ist, kann sie von der wässrigen, schweren Phase benetzt werden, die Partikel sedimentieren und werden mit der schweren Phase ausgewaschen. Gleichzeitig werden in dem Extraktionsmittel die Schadstoffe konzentriert und können so in einem Bioreaktor in technisch realisierbarer Größe biologisch abgebaut werden. Hierfür können die beiden o.g. Varianten 1 und 2 angewendet werden.

Wird das erfindungsgemäße Verfahren im Rahmen eines Bodenwaschverfahrens eingesetzt, so wird durch die extraktive Reinigung des Waschwassers ermöglicht, dieses Wasser erneut der Bodenwäsche zuzuführen und dadurch den Wasserverbrauch drastisch zu senken. Durch die Reduzierung des Wasserverbrauchs und durch die Reinigung der Fein- und Feinstkornfraktionen, d.h. durch die Vermeidung von Sondermüll, werden die Kosten eines Bodenwaschverfahrens erheblich gesenkt. Ferner können sowohl Extraktionskolonnen, als auch Air-Lift-Reaktoren bei relativ kleinen Druchmessern sehr hoch gebaut werden, so daß mit dem erfindungsgemäßen Verfahren Bodenwaschanlagen mit Flüssig-Flüssig-Extraktion und biologischer Stufe mit sehr geringem Platzbedarf aufgebaut werden können. Mit dem erfindungsgemäßen Verfahren ist es somit aus den eben genannten Gründen möglich geworden, Anlagen zur Entfernung und Vernichtung von biologisch abbaubaren Schadstoffen aus Abwässern aller Art mit sehr geringem Platzbedarf aufzubauen.

Zusammenschauend kann festgestellt werden, daß die Kombination eines Extraktionsverfahrens mit einem Bodenwaschverfahren bewirkt, daß
1. das Volumen der Flüssigkeit, die durch biologischen Abbau der Schadstoffe gereinigt werden soll, vermindert wird, daß
2. eine Aufkonzentrierung der Schadstoffe im Extraktionsmittel erfolgt, und daß
3. nicht nur im Ab- bzw. Waschwasser gelöste oder suspendierte Schadstoffe entfernt werden, sondern auch solche, die an festen, im Wasser suspendierten Partikeln adsorbiert sind.

Der 1. Effekt, nämlich die Volumenverringerung, bietet den Vorteil, daß das Volumen des Bioreaktors für den biologischen Abbau der Schadstoffe ebenfalls kleiner dimensioniert werden kann. Der 2. Effekt, nämlich die Aufkonzentrierung der Schadstoffe, bietet den Vorteil, daß auch solche Schadstoffe biologisch abgebaut werden können, die aufgrund ihrer geringen Löslichkeit in rein wässrigen Systemen in diesen wegen Substratliminierung biologisch nicht abgebaut werden können. Der 3. Effekt, nämlich die Reinigung von im Abwasser suspendierten Partikeln, bietet den Vorteil, daß diese Partikel nicht mehr als Sondermüll entsorgt werden müssen.

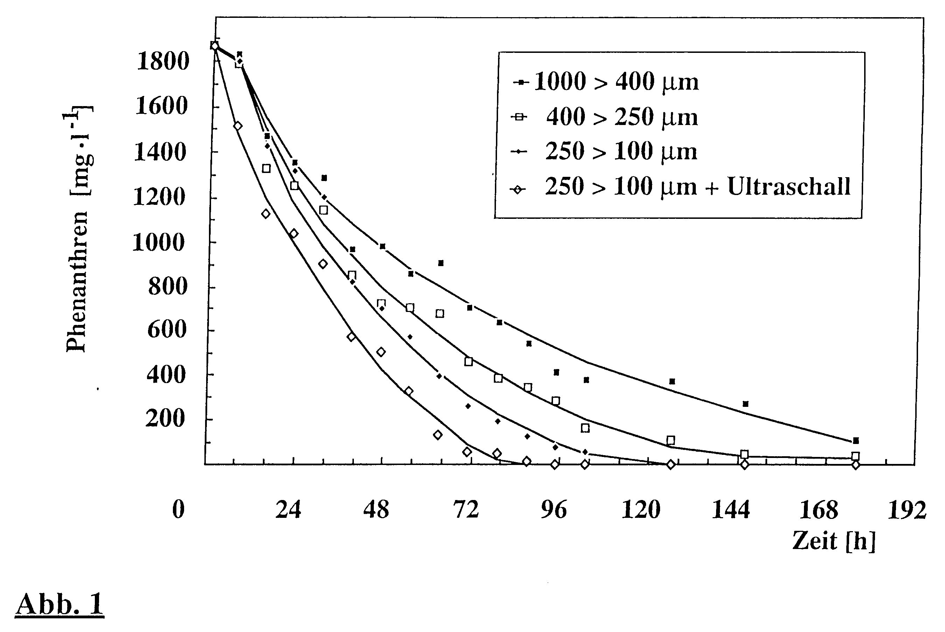

Überraschenderweise wurde festgestellt, daß durch den Einbau eines Extraktionsverfahrens in das erfindungsgemäße Verfahren die Bioverfügbarkeit der Schadstoffe durch Extraktion und Konzentrierung gewährleistet wird. Anhand der Figuren 1 bis 3 soll der Vorteil, den das erfindungsgemäße Verfahren aufgrund des Einbaus des Extraktionsverfahrens bietet, glaubhaft gemacht werden. Die Abbildungen 1 bis 3 zeigen Abbaukurven, die die Anmelderin durch Laborversuche mit einem Phenanthren abbauenden Bakterienstamm in Reinkultur am Beispiel des Abbaus von kristallinem Phenanthren unterschiedlicher Korngröße und durch Vergleich der Abbauleistungen von Phenanthren im wässrigen und im 2-Phasensystem gewonnen hat.

Abbildung 1 zeigt, daß die Abbaugeschwindigkeit direkt von der Größe der suspendierten Phenanthrenkristalle, also von der Diffusionsoberfläche, abhängt. Bakterienwachstum kann also nur stattfinden, wenn Phenanthren in Konzentrationen vorliegt, die die Löslichkeit in Wasser übersteigen. Kristallines Phenanthren wurde mit Analysesieben aus Edelstahl in 3 verschiedene Kristallgrößen-Fraktionen aufgeteilt. Von jeder Fraktion wurden jeweils 40 mg in 100 ml-Schüttelkolben mit sterilem Mineralsalz-Medium eingewogen. Die Hälfte der Kolben mit Phenanthren-Kristallen 100 µm < x < 400 µm wurden zusätzlich mit Ultraschall behandelt, um die Kristalle weiter zu zerkleinern. Die Kolben wurden mit 5 % (v/v) aus einer gut wachsenden Vorkultur beimpft. Um die Abbaukinetik aufzunehmen, wurde jeweils die verbliebene Menge Phenanthren in den Kolben bestimmt. Dazu wurden jeweils 2 Kolben jeder Kristallgrößen-Fraktion mit Diethylether (Volumenverhältnis 1:1) extrahiert und der Extrakt durch Strippen mit N₂ bis zur Trockene eingeengt. Der Rückstand wurde in 1 ml Methanol aufgenommen und mittels HPLC analysiert. Aus dem Diagramm ist ersichtlich, daß die Abbaugeschwindigkeit mit zunehmender Kristallgröße geringer wird. Der Phenanthrenabbau ist also von der spezifischen Oberfläche der Phenanthren-Kristalle abhängig und folglich durch die Lösungsgeschwindigkeit limitiert.

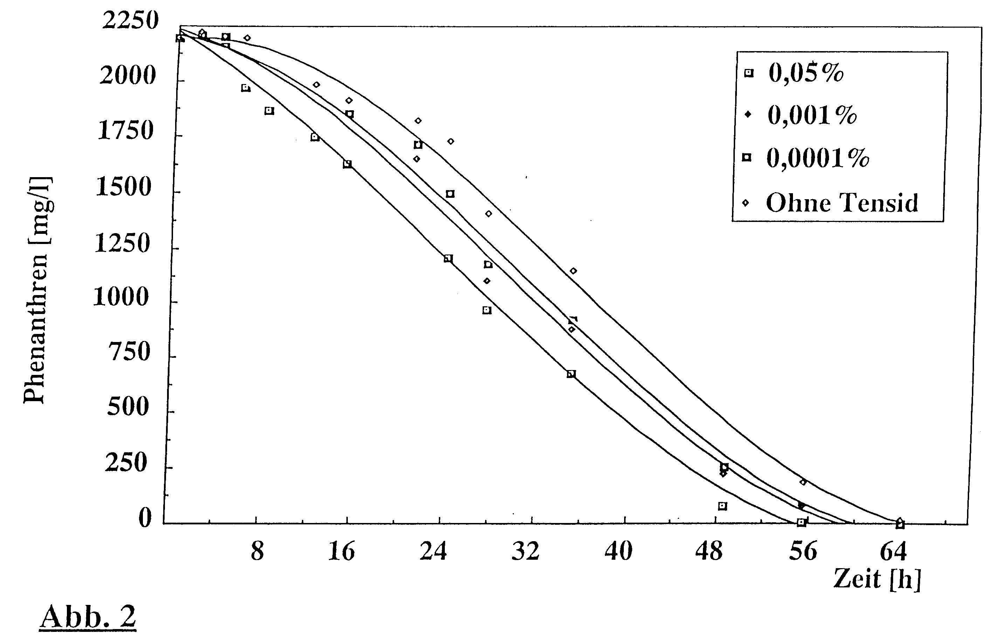

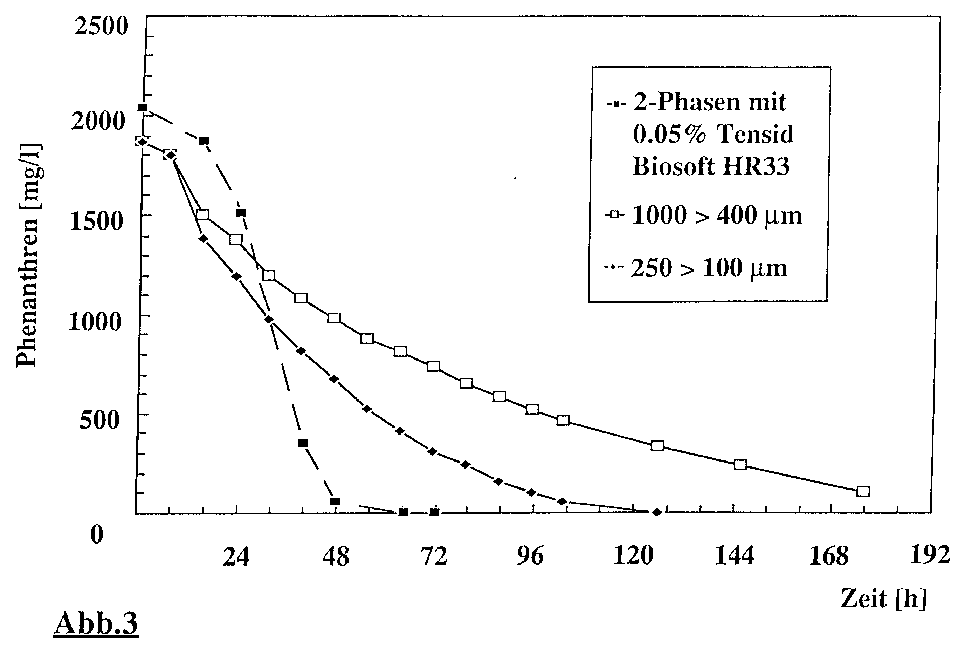

Die Abbildungen 2 und 3 belegen, daß der Abbau signifikant beschleunigt wird, wenn das Phenanthren nicht kristallin, sondern in gelöster Form in einer lipophilen Phase vorliegt. Das Substrat wurde in 2,2',4,4',6,8,8'-Heptamethylnonan (HMN), einem verzweigten, gesättigten, aliphatischen Kohlenwasserstoff gelöst. Je 50 ml dieser Lösung wurden einem Schüttelkolben mit 250 ml Mineralsalz-Medium zugesetzt, die unterschiedliche Konzentrationen von Biosoft HR 18 ^{R}, einem biologisch vollständig abbaubaren Tensid enthielten. Die Kolben wurden mit 5 % (v/v) aus einer aktiven Vorkultur des Phenanthrenabbauers beimpft. Die Phenanthren-Konzentration wurde verfolgt, indem aus der HMN-Phase jeweils 100 µl entnommen, mit Methanol verdünnt und mit HPLC analysiert wurden. In dem Diagramm ist erkennbar, daß sich der Phenanthren-Abbau durch den Einsatz eines Tensides tatsächlich steigern läßt. Im hier dargestellten Konzentrationsbereich steigt die Abbaugeschwindigkeit mit zunehmender Tensidkonzentration. Bei niedrigeren Konzentrationen ist der Tensideinfluß nicht mehr signifikant, höhere Konzentrationen bringen keine zusätzliche Beschleunigung des Abbaus. Sehr hohe Tensidkonzentrationen können toxisch wirken. Der einsatzrelevante Konzentrationsbereich muß für jedes Tensid im Vorversuch ermittelt werden. Aus Abbildung 3 ist ersichtlich, daß der Phenanthren-Abbau durch den Einsatz von Lösungsvermittlern, also Lösungsmitteln und Tensiden, drastisch beschleunigt werden kann. Die verwendeten Tenside Biosoft HR 18 ^{R} und Biosoft HR 33 ^{R} haben die folgende Struktur.

H₃C-(CH₂)₅-CHOH-CH₂-CH=CH-(CH₂)₇-COO-(CH₂-CH₂-O)ₙ-H

mit
- n = 18 :: Biosoft HR 18 ^{R} und
- n = 33 :: Biosoft HR 33 ^{R}.

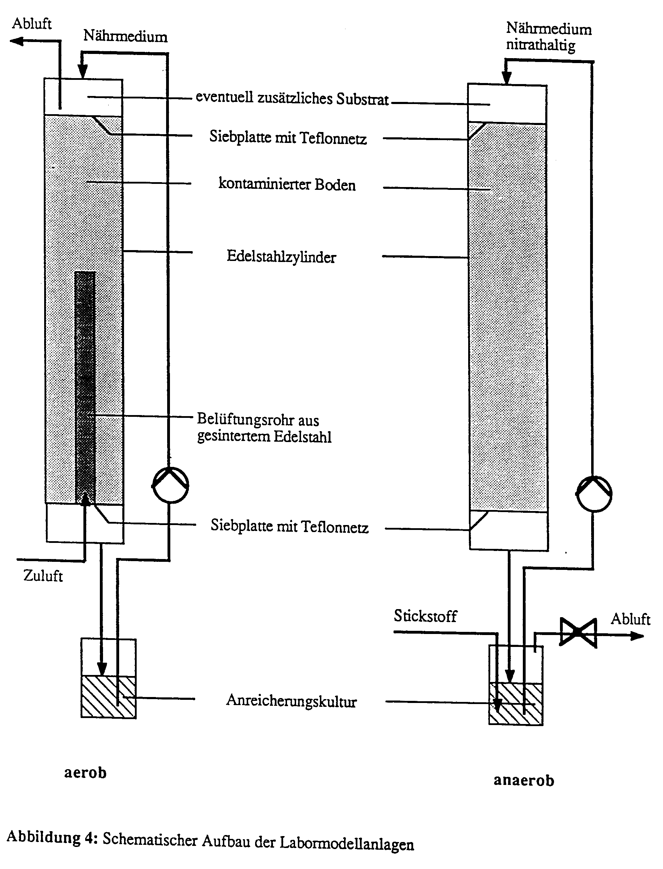

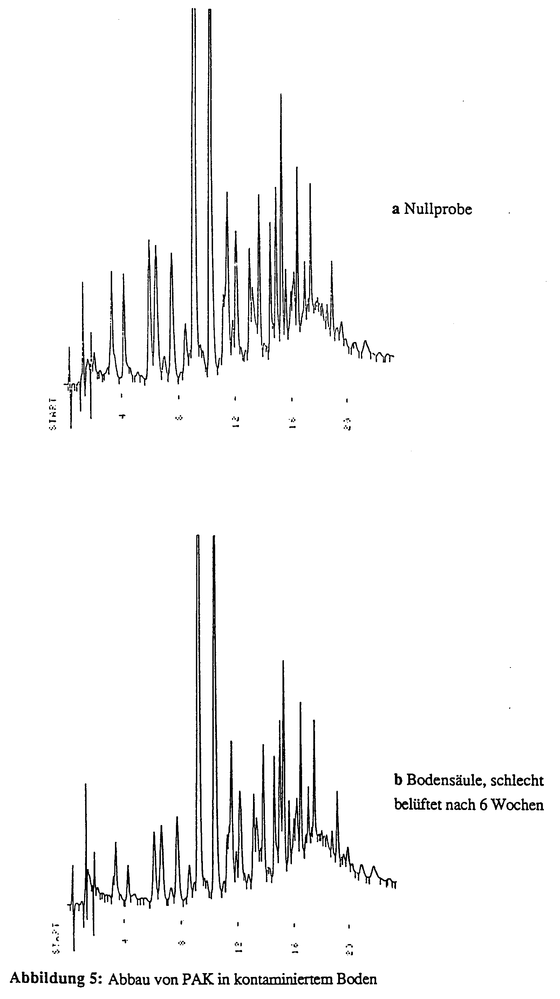

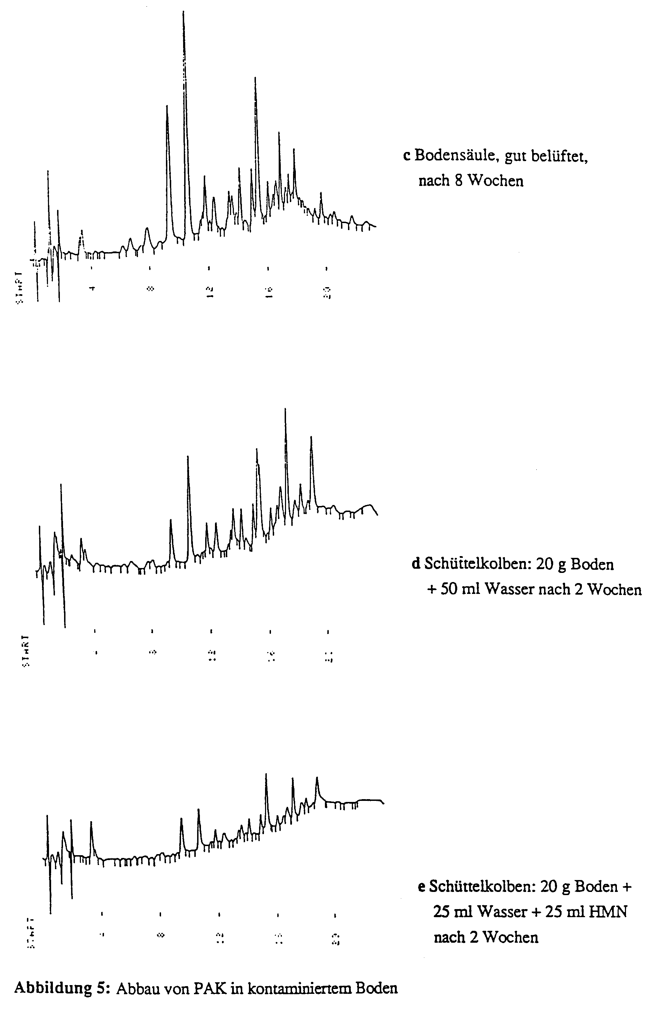

Die Abbildungen 4 und 5 beziehen sich auf Versuche mit einem mit polycyclischen, aromatischen Kohlenwasserstoffen (PAK) kontaminierten Boden aus einem Kokereigelände. Um den PAK-Abbau nach dem erfindungsgemäßen Verfahren in Bioreaktoren mit dem in Regenartionsmieten nach dem Stand der Technik modellhaft vergleichen zu können, wurde PAK-kontaminierter Boden mit hohem Schluffanteil parallel in Perkolationssäulen (Abbildung 4) und Schüttelkolben mit und ohne Heptamethylnonan inkubiert. Die Bodenproben aus den Säulen und Kolben wurden durch Vakuumdestillation getrocknet, mit Dichlormethan extrahiert, 1:100 in Methanol verdünnt und in der HPLC analysiert. Abbildung 5 zeigt die HPLC-Diagramme der Bodenextrakte. 5a ist der Extrakt des sehr gründlich homogenisierten Bodens vor Versuchbeginn, 5b zeigt einen Extrakt aus einer schlecht belüfteten, also kompakt gefüllten Bodensäule nach einer Versuchsdauer von 6 Wochen. In Abbildung 5c ist erkennbar, daß durch Belüftung (hier auch durch die lockere Packung der Bodensäule) ein Effekt zu erzielen ist. Anaerobe Bodensäulen (hier nicht dargestellt) mit dichter Packung zeigten nach 6 Wochen Versuchsdauer nur marginalen PAK-Abbau. In Abbildung 5d und 5e wird deutlich, daß nach wesentlich kürzerer Zeit ein wesentlich besserer Abbau erzielt werden kann, wenn der Boden ständig durchmischt und belüftet wird, wobei der Einsatz von Heptamethylnonan den Abbau nochmals signifikant beschleunigt.

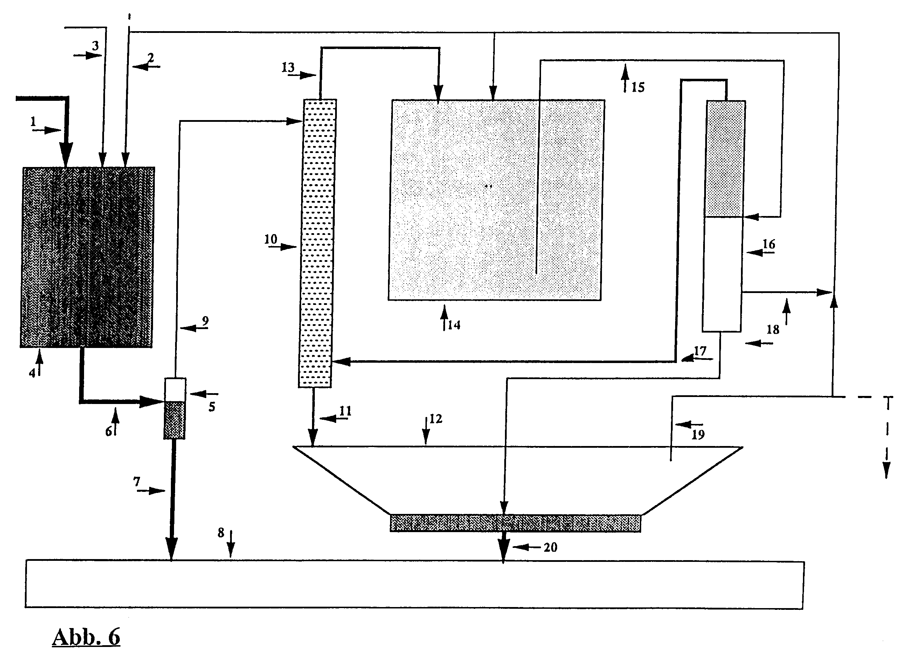

Abbildung 6 zeigt schematisch das erfindungsgemäße Verfahren am Beispiel eines Bodenwaschverfahrens. Der kontaminierte Boden (1) wird zusammen mit dem Wasser (2) und eventuell einem Tensid (3) einer Bodenwaschanlage (4) zugeführt und dort gereinigt. In einer Fraktionierungsanlage (5) wird das Waschwasser (6) von Bodenfraktionen mit Korngrößen größer als 100 µm (7) getrennt. Die Bodenfraktionen (7) werden wiederverfüllt oder einer anderen Verwendung zugeführt (8). Das Waschwasser (9), welches Bodenfraktionen mit Korngrößen kleiner als 100 µm enthält, wird einer Flüssig-Flüssig-Extraktion (10) zugeführt. Das gereinigte Waschwasser (11), welches Schluff und Feinkornpartikel mit Korngrößen kleiner als 100 µm enthält, wird in ein Absatzbecken (12) geleitet.

Das Extraktionsmittel (13), welches die aufkonzentrierten Schadstoffe enthält, wird der biologischen Reinigung (14) unterworfen. Das biologisch von den Schadstoffen befreite, mit Wasser vermischte Extraktionsmittel (15) wird einer Phasentrennung (16) unterzogen und das abgetrennte Extraktionsmittel (17) erneut der Flüssig-Flüssig-Extraktion (10) zugeführt. Die wässrige Phase (18) der Phasentrennung (16) wird entweder der biologischen Reinigung (14) oder der Bodenwaschanlage (4) oder dem Absatzbecken (12) (Sedimentation) zugeführt. Die wässrige Phase (19) des Absatzbeckens (12) wird als Abwasser abgeleitet, der biologischen Reinigung (14) oder der Bodenwaschanlage (4) zugeführt, die feste Phase (20) wird wiederverfüllt oder einer anderen Verwendung zugeführt.

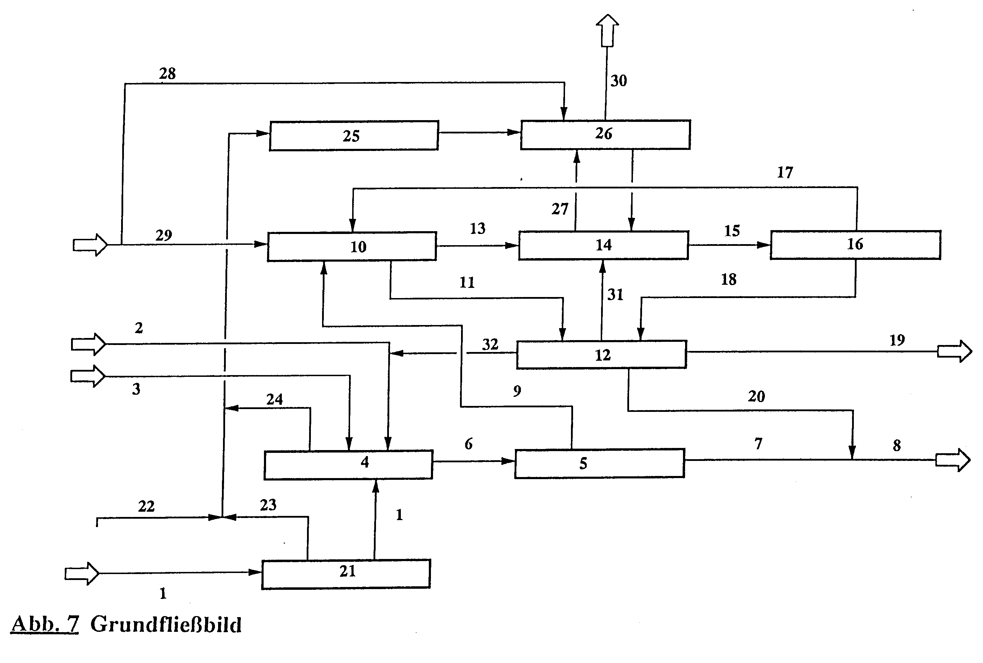

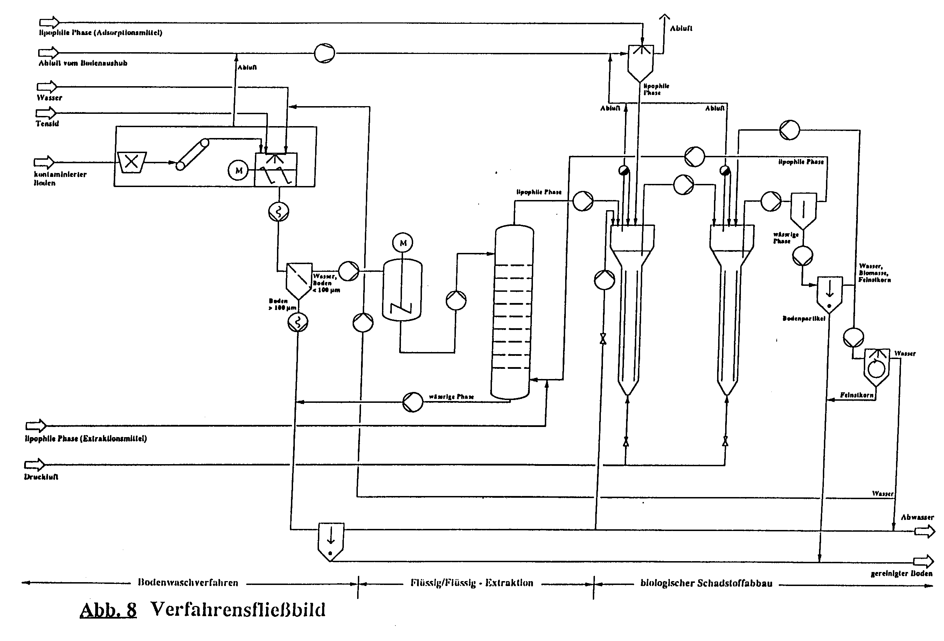

Die Abbildung 7 zeigt eine Ausführungsform des erfindungsgemäßen Verfahrenskonzeptes als Grundfließbild und Abbildung 8 als Verfahrensfließbild. Bei dieser Ausführungsform des erfindungsgemäßen Verfahrens werden zusätzlich die Abluftströme berücksichtigt. Der Bodenaushub und die Bodenwaschanlage sind eingehaust und die Luft wird permanent abgesaugt. Die Abluft wird ebenso wie die Abluft aus den Bioreaktoren in einem Gaswäscher gereinigt, in dem die lipohpile Phase des Bioreaktors als Aufnehmphase dient. In einer weiteren Ausführungsform des erfindungsgemäßen Verfahrens, bei dem als Bioreaktoren Air-lift Reaktoren eingesetzt werden, können diese mit der Abluft von Bodenaushub und Bodenwaschanlage betrieben werden.

Der kontaminierte Boden (1) wird einer Zerkleinerung (21) unterworfen und zusammen mit dem Wasser (2) und eventuell einem Tensid (3) einer Bodenwaschanlage (4) zugeführt und dort gereinigt. In einer Fraktionierungsanlage (5) (Naßklassierung) wird das Waschwasser (6) von Bodenfraktionen mit Korngrößen größer als 100 µm (7) getrennt. Die Bodenfraktionen (7) werden wiederverfüllt oder einer anderen Verwendung zugeführt (8). Das Waschwasser (9), welches Bodenfraktionen mit Korngrößen kleiner als 100 µm enthält, wird einer Flüssig-Flüssig-Extraktion (10) zugeführt. Das gereinigte Waschwasser (11), welches Schluff und Feinkornpartikel mit Korngrößen kleiner als 100 µm enthält, wird in ein Absatzbecken (12) geleitet. Das Extraktionsmittel (13), welches die aufkonzentrierten Schadstoffe enthält, wird der biologischen Reinigung (14) unterworfen. Das biologisch von den Schadstoffen befreite, mit Wasser vermischte Extraktionsmittel (15) wird einer Phasentrennung (16) unterzogen und das abgetrennte Extraktionsmittel (17) erneut der Flüssig-Flüssig-Extraktion (10) zugeführt. Die wässrige Phase (18) der Phasentrennung (16) wird dem Absatzbecken (12) zugeführt. Die wässrige Phase (19) des Absatzbeckens (12) wird als Abwasser abgeleitet, die feste Phase (20) wird wiederverfüllt oder einer anderen Verwendung zugeführt (8). Die Abluft (22) des ausgehobenen, kontaminierten Bodens, die Abluft (23) der Zerkleinerung (21) und die Abluft (24) der Bodenwäsche werden über eine Luftabsaugung (25) einer Gaswäsche (26) unterzogen, ebenso wie die Abluft (27) des Bioreaktors (14) und die Abluft (28) der lipophilen Phase (29). Die gereinigte Abluft (30) kann an die Umwelt abgegeben werden. Wasser mit Biomasse (31) aus dem Absetzbecken (12) wird in den Bioreaktor (14) zurückgeleitet. Das gereinigte Wasser (32) aus der Sedimentation (12) wird erneut der Bodenwäsche zugeführt.

### Beispiel:

Das erfindungsgemäße Verfahren wird am Ausführungsbeispiel eines Bodenwaschverfahrens zur Sanierung eines ehemaligen Kokereigeländes, welches nach dem Stand der Technik nicht sanierbar ist, näher erläutert. Das Gelände hat einen sehr hohen Feinstkornanteil (60 bis über 90 %) und als Schadstoffe treten vorwiegend polycyclische, aromatische Kohlenwasserstoffe auf. Diese sind extrem schwer löslich. Um sie von den Bodenpartikeln lösen zu können, sind Waschverfahren unter Einsatz von Tensiden und/oder großer mechanischer Kräfte erforderlich. Bei diesen Waschverfahren wird das Feinstkorn mit dem Wasser ausgetragen, ohne daß die polycyclischen, aromatischen Kohlenwasserstoffe gelöst worden wären. Durch die Verwendung von organischen Lösungsmitteln als Extraktionsmittel werden nun während der Flüssig-Flüssig-Extraktion die gelösten Schadstoffe zusammen mit dem Tensid in die organische Phase übergeführt. In einem Extraktor mit ausreichenden Turbulenzen werden die Feinstkornpartikel, die zunächst vollständig in die organische Phase übergegangen sind, von den polycyclischen, aromatischen Kohlenwasserstoffen befreit, die gleichzeitig in der organischen Phase konzentriert werden. Dadurch wird das zu reinigende Flüssigvolumen verringert.

Durch die extrem schlechte Löslichkeit der polycyclischen, aromatischen Kohlenwasserstoffe in Wasser liegen diese im Waschwasser in derart niedrigen Konzentrationen vor, daß Bakterien, die die polycyclischen, aromatischen Kohlenwasserstoffe als Kohlenstoff- und Energiequelle nutzen können und die deshalb bei einer biologischen Aufarbeitung dieser Waschwässer eingesetzt werden könnten, durch Nährstoffmangel ständig in ihrem Wachstum gehemmt sind. Das Wachstum dieser Bakterien wird beschleunigt, wenn die polycyclischen, aromatischen Kohlenwasserstoffe in einer organischen Phase gelöst vorliegen. Ideale Bedingungen erhält man, wenn diese organische Phase gleichzeitig das Extraktionsmittel bildet. Die polycyclischen, aromatischen Kohlenwasserstoffe müssen in der wässrigen Phase nicht mehr gelöst werden, sondern sie diffundieren in gelöstem Zustand aus der organischen in die wässrige Phase über. Diese Diffusion erfolgt mit der Geschwindigkeit, mit der die Schadstoffe in der wässrigen Phase von den Bakterien abgebaut werden. Besonders ausgeprägt ist dieser Effekt, wenn, wie im vorliegenden Falle, ein Tensid im Waschverfahren eingesetzt wurde, welches als Emulgator wirkt und die Diffusionsoberfläche vergrößert. Als Reaktor wird ein Umlaufreaktor eingesetzt.

Geeignete Vorrichtungen zur Durchführung des erfindungsgemäßen Verfahrens enthalten eine Extraktionseinheit (10), in der das Abwasser von den Schadstoffen befreit wird, und der eine Einheit für die biologische Reinigung (14) nachgeschaltet ist, in der die Schadstoffe biologisch abgebaut werden. Bevorzugte Ausführungsformen enthalten eine der Extraktionseinheit (10) vorgeschaltete Einheit zur Fraktionierung (5) des Abwassers, in der im Abwasser suspendierte, feste Partikel mit Korngrößen größer als 100 µm abgetrennt werden. Weitere Ausführungsformen der erfindungsgemäßen Vorrichtung erhält man, wenn man der Einheit zur biologischen Reinigung (14) eine Einheit zur Phasentrennung (16) nachschaltet, in der das in der Einheit zur biologischen Reinigung gereinigte Extraktionsmittel von der wässrigen Phase abgetrennt wird, wobei, ohne Einschränkung der Allgemeinheit, die Extraktionseinheit (10), die Einheit zur biologischen Reinigung (14) und zur Phasentrennung (16) in der Art angeordnet sein können, daß das aus der Phasentrennung (16) erhaltene, gereinigte Extraktionsmittel erneut der Extraktionseinheit (10) zugeführt wird. Weitere Ausführungsformen der erfindungsgemäßen Vorrichtung können ein Absetzbecken (12) enthalten, welches der Extraktionseinheit (10) und/oder der Einheit zur Phasentrennung (16) nachgeschaltet ist, und in welches die wässrige Phase der Extraktionseinheit (10) und/oder der Einheit zur Phasentrennung (16) geleitet wird.

Vorrichtungen, die im Rahmen eines Bodenwaschverfahrens eingesetzt werden können, enthalten vor der Extraktionseinheit (10) oder, falls vorhanden, vor der Fraktionierungseinheit (5) eine Einheit zur Bodenwäsche (4), in der der kontaminierte Boden gereinigt wird.

### Liste der Bezugszeichen

- 1: kontaminierter Boden
- 2: Wasser
- 3: Tensid
- 4: Bodenwaschanlage
- 5: Fraktionierung
- 6: Waschwasser aus der Bodenwaschanlage
- 7: Bodenfraktionen mit Korngrößen > 100 µm
- 8: Wiederverfüllung, andere Verwendung
- 9: Waschwasser aus der Fraktionierung plus Bodenfraktionen mit Korngrößen > 100 µm
- 10: Flüssig-Flüssig-Extraktion
- 11: gereinigtes Wasser der Flüssig-Flüssig-Extraktion plus Schluff und Feinkorn < 100 µm
- 12: Absetzbecken
- 13: Extraktionsmittel plus aufkonzentrierte Schadstoffe
- 14: biologische Reinigung
- 15: von Schadstoffen befreites Extraktionsmittel plus Wasser
- 16: Phasentrennung
- 17: abgetrenntes, gereinigtes Extraktionsmittel
- 18: wässrige Phase der Phasentrennung 16
- 19: wässrige Phase des Absetzbeckens
- 20: feste Phase des Ansetzbeckens
- 21: Zerkleinerung
- 22: Abluft des ausgehobenen, kontaminierten Bodens
- 23: Abluft aus der Zerkleinerung
- 24: Abluft aus der Bodenwäsche
- 25: Luftabsaugung
- 26: Gaswäsche
- 27: Abluft des Bioreaktors
- 28: Abluft der lipophilen Phase (Extraktionsmittel)
- 29: lipophile Phase, Extraktionsmittel
- 30: gereinigte Abluft
- 31: Wasser mit Biomasse aus dem Absatzbecken
- 32: gereinigtes Wasser aus der Sedimentation

## Patentansprüche

1. Verfahren zur Reinigung von mit biologisch abbaubaren Schadstoffen kontaminierten Böden mit folgenden Merkmalen:
- man unterwirft den zu reinigenden Boden einem Bodenwaschverfahren und überführt die biologisch abbaubaren Schadstoffe mit der Fein- bzw. Feinstkornfraktion in das Waschwasser;
- man unterwirft das mit dem biologisch abbaubaren Schadstoffen kontaminierte Waschwasser mit der Fein- bzw. Feinstkornfraktion einer Extraktion mit einem in Wasser nur schwer löslichen Extraktionsmittel und überführt die biologisch abbaubaren Schadstoffe in das Extraktionsmittel;
- man trennt das mit den biologisch abbaubaren Schadstoffen kontaminierte Extraktionsmittel von dem Waschwasser ab und unterwirft es einer biologischen Reinigung, in dem die biologisch abbaubaren Schadstoffe in einem Bioreaktor durch biologischen Abbau aus dem Extraktionsmittel entfernt und vernichtet werden.

2. Verfahren nach Ansprüch 1 **dadurch gekennzeichnet**, daß das Abwasser von lipophilen Schadstoffen gereinigtwird.

3. Verfahren nach Anspruch 1 oder 2, **dadurch gekennzeichnet**, daß lipophile Flüssigkeiten als Extraktionsmittel verwendet werden.

4. Verfahren nach einem oder mehreren der Ansprüche 1 bis 3, **dadurch gekennzeichnet**, daß Flüssigkeiten als Extraktionsmittel verwendet werden, die eine geringere Dichte als das zu reinigende Abwasser aufweisen.

5. Verfahren nach einem oder mehreren der Ansprüche 1 bis 4, **dadurch gekennzeichnet**, daß hochsiedende Flüssigkeiten als Extraktionsmittel verwendet werden.

6. Verfahren nach einem oder mehreren der Ansprüche 1 bis 4, **dadurch gekennzeichnet**, daß leichtflüchtige Flüssigkeiten als Extraktionsmittel verwendet werden.

7. Verfahren nach einem oder mehreren der Ansprüche 1 bis 6, **dadurch gekennzeichnet**, daß die Extraktion unter hochturbulenten Bedingungen in einem Extraktor durchgeführt wird.

8. Verfahren nach einem oder mehreren der Ansprüche 1 bis 7, **dadurch gekennzeichnet**, daß der biologische Abbau der Schadstoffe in einem Umlauf-Reaktor, in dem eine oder mehrere Phasen zirkulieren, durchgeführt wird.

9. Verfahren nach einem oder mehreren der Ansprüche 3 bis 8, **dadurch gekennzeichnet**, daß nach der Extraktion die suspendierten, festen Partikel durch mechanische Verfahren aus dem Abwasser entfernt werden.

10. Verfahren nach einem oder mehreren der Ansprüche 1 bis 9, **dadurch gekennzeichnet**, daß das Extraktionsmittel durch den biologischen Abbau der Schadstoffe im Bioreaktor regeneriert und erneut der Extraktion zugeführt wird.

11. Verfahren nach einem oder mehreren der Ansprüche 1 bis 9, **dadurch gekennzeichnet**, daß das Extraktionsmittel nach der Extraktion durch Destillation von den Schadstoffen abgetrennt und erneut der Extraktion zugeführt wird, und daß der mit den Schadstoffen beladene Rückstand der Destillation zum biologischen Abbau in den Bioreaktor geleitet wird.

12. Verfahren nach einem oder mehreren der Ansprüche 1 bis 10, **dadurch gekennzeichnet**, daß das Extraktionsmittel nach der biologischen Entfernung der Schadstoffe mit einem mechanischen Verfahren abgetrennt und erneut der Extraktion zugeführt wird.

## Claims

1. Method for cleaning soils contaminated by biodegradable contaminants with the following features:
- the soil to be cleaned is subjected to a soil washing process and transfers the biodegradable contaminants with the fine and microfine granular fractions into the wash water;
- the wash water contaminated with the biodegradable contaminants with the fine and microfine granular fractions is subjected to an extraction with an extraction agent which is difficult to dissolve in water, and transfers the biodegradable contaminants into the extraction agent;
- the extraction agent contaminated with the biodegradable contaminants is separated from the wash water and subjected to biological cleaning, the biodegradable contaminants being removed from the extraction agent and destroyed by biological breakdown.

2. Method according to Claim 1, characterised in that the waste water is purified of lipophile contaminants.

3. Method according to Claim 1 or 2, characterised in that lipophile liquids are used as extraction agents.

4. Method according to one or more of Claims 1 - 3, characterised in that liquids are used as extraction agents which have a density less than that of the waste water to be cleaned.

5. Method according to one or more of Claims 1 - 4, characterised in that high-boiling point liquids are used as extraction agents.

6. Method according on one or more of Claims 1 - 4 , characterised in that easily volatile liquids are used as extraction agents.

7. Method according to one or more of Claims 1 - 6, characterised in that the extraction is carried out under highly turbulent conditions in an extractor.

8. Method according to one or more of Claims 1 - 7, characterised in that the biological breakdown of the contaminants is carried out in a circulating reactor in which one or more phases circulate.

9. Method according to one or more of Claims 3 - 8, characterised in that after extraction, the suspended solid particles are removed from the waste water by mechanical methods.

10. Method according to one or more of Claims 1 - 9, characterised in that the extraction agent is regenerated in the bioreactor by the biological breakdown of the contaminants, and is again passed to the extraction.

11. Method according to one or more of Claims 1 - 9, characterised in that the extraction agent, after extraction, is separated by distillation from the contaminants, and is again passed to the extraction, and in that the residue of the distillation, charged with the contaminants, is passed into the bioreactor for biological breakdown.

12. Method according to one or more of Claims 1 - 10, characterised in that the extraction agent, after biological removal of the contaminants, is separated by a mechanical process, and is again passed to the extraction.

## Revendications

1. Procédé de nettoyage de sol contaminé par des matières nocives biodégradables, et présentant les caractéristiques suivantes :
- on soumet le sol à nettoyer à un procédé de lavage de la terre et on transfère les matières nocives biodégradables à l'eau de lavage pour les fractions à grains fins et à grains très fins,
- on soumet l'eau de lavage contaminée par les matières nocives biodégradables avec la fraction de grains fins ou de grains très fins à une extraction avec un agent d'extraction seulement difficilement soluble dans l'eau et on transfère les matières nocives biodégradables dans l'agent d'extraction,
- on sépare l'agent d'extraction contaminé par les matières nocives biodégradables de l'eau de lavage et on soumet cet agent à un nettoyage biologique, au cours duquel les matières nocives biodégradables sont enlevées de l'agent d'extraction et sont détruites par dégradation biologique dans un bioréacteur.

2. Procédé selon la revendication 1, caractérisé en ce que l'on nettoie les eaux usées des matières nocives lipophiles.

3. Procédé selon la revendication 1 ou 2, caractérisé en ce qu'on utilise les liquides lipophiles comme agents d'extraction.

4. Procédé selon l'une ou plusieurs des revendications 1 à 3, caractérisé en ce qu'on utilise comme agents d'extraction, des liquides de densité plus faible que celle de l'eau à nettoyer.

5. Procédé selon l'une ou plusieurs des revendications 1 à 4, caractérisé en ce qu'on utilise comme agents d'extraction des liquides à température d'ébullition très élevée.

6. Procédé selon l'une ou plusieurs des revendications 1 à 4, caractérisé en ce qu'on utilise comme agents d'extraction, des liquides très volatiles.

7. Procédé selon l'une ou plusieurs des revendications 1 à 6, caractérisé en ce qu'on effectue l'extraction dans un extracteur sous des conditions de circulation très turbulentes.

8. Procédé selon l'une ou plusieurs des revendications 1 à 7, caractérisé en ce qu'on effectue une dégradation biologique des matières nocives dans un réacteur à circulation dans lequel circulent une ou plusieurs phases.

9. Procédé selon l'une ou plusieurs des revendications 3 à 8, caractérisé en ce qu'après extraction, on enlève par un procédé mécanique les particules solides en suspension dans les eaux usées.

10. Procédé selon l'une ou plusieurs des revendications 1 à 9, caractérisé en ce qu'on régénère l'agent d'extraction par biodégradation des matières nocives dans un bioréacteur et on fournit de nouveau l'agent d'extraction à l'opération d'extraction.

11. Procédé selon l'une ou plusieurs des revendications 1 à 9, caractérisé en ce qu'après l'extraction par distillation des matières nocives, on sépare l'agent d'extraction et on l'utilise de nouveau pour l'extraction, et en ce que le résidu de distillation chargé de matières nocives est mis dans le bioréacteur pour sa dégradation biologique.

12. Procédé selon l'une ou plusieurs des revendications 1 à 10, caractérisé en ce qu'après l'enlèvement biologique des matières nocives, on sépare l'agent d'extraction par un procédé mécanique et on l'utilise de nouveau.
